# EUROPÄISCHE PATENTANMELDUNG

(11) **EP 3 733 749 A1**
(43) Veröffentlichungstag der Anmeldung: **04.11.2020**
(21) Anmeldenummer: 19172277.6
(22) Anmeldetag: 02.05.2019
(51) Int. Cl.: C08J 7/04

(54) **METALLISIERTE FOLIE**

(71) Anmelder: Hueck Folien Gesellschaft m.b.H., 4342 Baumgartenberg (AT)
(72) Erfinder: AIGNER, Georg, 4482 Ennsdorf (AT); RICKER, Waltraud, 3321 Ardagger Markt (AT)
(74) Vertreter: Burger, Hannes

(57) **Zusammenfassung**

Die Erfindung betrifft eine metallisierte Folie, insbesondere eine metallisierte Kunststofffolie, die auf zumindest einer Oberfläche eine metallische Schicht aufweist, dadurch gekennzeichnet, dass sie folgende Schichten in der angegebenen Reihenfolge aufweist:
a) ein Trägersubstrat aus einer Kunststofffolie
b) eine Lackschicht als Haftvermittlerschicht
c) eine insbesondere direkt, auf die Lackschicht aufgebrachte, metallische Schicht
d) ggf. eine Deckschicht

## Beschreibung

Die Erfindung betrifft eine metallisierte Folie, insbesondere eine metallisierte Kunststofffolie, die auf zumindest einer Oberfläche eine metallische Schicht aufweist

Weiters betrifft die Erfindung ein Verfahren zur Herstellung einer metallisierten Folie.

Die Aufbringung von dekorativen Schichten, insbesondere auch die Aufbringung von metallischen Dekorschichten auf einen Träger, eine Trägerfolie oder einen Gegenstand erfolgt üblicherweise unter Verwendung durch Transferieren der Schichten von einer Transferfolie auf den Träger bzw. Gegenstand. Dieses Transferverfahren wird insbesondere bei der Verwendung von Polyethylenfolien als Träger eingesetzt, da Polyethylen aufgrund seiner physikalischen Eigenschaften, wie Temperaturbeständigkeit, niedrige Glasübergangstemperatur Tg und dergleichen eine direkte spiegelnde Metallisierung sehr schwierig macht. Die Transferfolie besteht aus einem Trägersubstrat, auf das die dekorative(n) Schichte(n) aufgebracht ist/sind. Nach dem Transfer der dekorativen Schichte(n) kann das Trägersubstrat der Transferfolie entfernt werden.

Nachteil dieser Art der Aufbringung von dekorativen, insbesondere metallischen Schichten ist dabei, dass die Haftung der Schicht(en) zum Träger schlecht oft ungenügend ist und vor allem ein nachfolgendes Bedrucken der dekorativen Schichte(n) nur schwer möglich ist. Daher muss nach erfolgtem Transfer zwingend ein zusätzlicher Druckprimer aufgebracht werden, um eine ausreichende Bedruckbarkeit zu ermöglichen.

Aus WO 2007/054343 A2 ist eine Dekorfolie zum Aufbringen auf beliebige Träger bekannt, die aus eine polymeren Trägerfolie besteht, die mit einer metallischen Schicht und/oder einer Bedruckung und mindestens einer Schutzlackschicht versehen ist.

Aus US 4,403,004 ist ein dekoratives Laminat mit hoher Reflexion und Brillanz bekannt. Das Laminat umfasst eine Basisschicht, die aus einem thermoformbaren Harzfilm hergestellt ist, dessen beide Oberflächen mit einer dünnen, anhaftenden Metallschicht überzogen sind, die durch ein PVD- Verfahren hergestellt sind. Eine Schutzschicht, ist mit einer der metallisierten Oberflächen der Basisschicht verklebt ist. Zwischen der Schutzschicht und der metallisierten Oberfläche der Basisschicht befindet sich eine druck- und wärmeempfindliche elastomere Klebstoffbeschichtung, die gegen ultraviolette Strahlung unempfindlich und für die Metallschichten unschädlich ist.

Aufgabe der vorliegenden Erfindung war es, eine direkt metallisierte Folie bereitzustellen, die eine hochglänzende spiegelnde Oberfläche aufweist und bedruckbar und insbesondere für flexible Produkte, beispielsweise als Etikettenfolie einsetzbar ist.

Die oben genannte Aufgabe wir mit einer Folie der eingangs genannten Art erfindungsgemäß dadurch gelöst, dass sie folgende Schichten in der angegebenen Reihenfolge aufweist
a) ein Trägersubstrat aus einer Kunststofffolie
b) eine Lackschicht als Haftvermittlerschicht
c) eine insbesondere direkt, auf die Lackschicht aufgebrachte metallische Schicht
d) ggf. eine Deckschicht

Die erfindungsgemäße Lösung erlaubt die Realisierung einer metallisierten Folie, die eine sehr gute Spiegeloptik aufweist und für insbesondere für flexible Eikettenfolien geeignet ist.

Als Trägersubstrate kommen beispielsweise vorzugsweise transparente Trägerfolien vorzugsweise flexible Kunststofffolien, beispielsweise aus Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK) Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF) und Ethylen-Tetrafluorethylen-Hexafluorpropylen-Fluorterpolymer (EFEP) in Frage.

Besonders geeignet sind Polyolefinfolien, wie Polyethylen- oder Polypropylenfolien.

Die Trägerfolien weisen vorzugsweise eine Dicke von 5 - 700 µm, bevorzugt 30- 150 µm, besonders bevorzugt 50 - 100 µm auf. Die Folien können blasextrudierte oder castextrudierte Folien sein.

Auf die Trägerfolie wird eine Haftvermittlerschicht aufgebracht. Die Haftvermittlerschicht, wird bevorzugt direkt auf die Trägerfolie aufgebracht. Die Haftvermittlerschicht kann aus einem wässrigen Lacksystem auf Basis eines selbstvernetzenden und/oder eines mit Härter vernetzbaren Polymers, beispielsweise auf Basis eines selbstvernetzenden Polyurethans bestehen.

Das Lacksystem weist bevorzugt hohe Barriereeigenschaften auf. Insbesondere liegt die Sauerstoffdurchlässigkeit nach DIN 53310-1 vorzugsweise bei 0,01 - 1000 ccm³/m², bevorzugt 0,05 - 100 ccm³/m², besonders bevorzugt 0,1 - 5 cm³/m².

Die Haftung des Lacksystems beträgt bevorzugt mindestens 4 N/15 mm. Folgender Prüfvorgang kann zur Messung durchgeführt werden:
Auf der zu prüfenden Folie wird quer zur Laufrichtung ein ca. 40 cm langes Stück des vorgeschriebenen Tesafilms links, mitte und rechts am Prüfmuster aufgeklebt und von Hand festgedrückt. Anschließend wird der Tesafilm in gleichmäßigem Zug in einem Abzugswinkel von ca. 135 ° von der zu prüfenden Folie abgezogen. Bei Bestehen der Prüfung beträgt die Haftung des Lacksystem mehr als 4 N/15 mm.

Die Viskosität des Lacksystems beträgt erfindungsgemäß < 200mPas, vorzugsweise < 20mPas.

Die als Haftvermittlerschicht wirkende Lackschicht wird mittels eines Rasters aufgebracht, um einen möglichst homogenen Schichtverlauf zu gewährleisten.
Bewährt haben sich dabei Linienraster von 160 - 300 Linien/cm, besonders von 200 - 260 Linien/ cm.

Zur Aufbringung der Lackschicht eignen sich insbesondere Rasterwalzen, die ein gutes Verfließen der Lackschicht gewährleisten. Das Auftragen der Lackschicht mit einer Rasterwalze kann beispielsweise in einem Raster-Mitlauf oder einem Raster-Gegenlauf oder in einem Linien-Raster-Mitlauf oder einem Linein-Raster-Gegenlauf oder unter Verwendung einer Druckkammerrakel erfolgen. Die soeben genannten Varianten können auch in einem Kiss Coating Modus betrieben werden.

Allerdings können zusätzlich und alternativ auch andere Verfahren und Hilfsmittel, wie beispielsweise eine Mayer Stange ("Mayer Rod" bzw. "Mayer Bar") und/oder Düsen, z. B. Schlitzdüsen, etc. zum Einsatz kommen, um die Lackschicht aufzubringen.

Die Auftragsdicke dieser Lackschicht beträgt vorzugsweise < 3 g/m², bevorzugt 0,8 - 1,2 g/m².

Zur Trocknung der Lackschicht wird vorzugsweise ein Rampenprogramm eingesetzt, wobei je nach Bahngeschwindigkeit und verwendetem Lack eine Temperaturfolge von 40 - 70°C → 90 - 120°C → 40 - 70°C eingestellt wird. Die Bahngeschwindigkeit beträgt dabei 1 - 500 m/min, bevorzugt 50 bis 250 m/min. Die Bahnspannung beim Trocknungsprozess beträgt dabei erfindungsgemäß < 50 daN/m, besonders bevorzugt 7 -16 daN/m

Anschließend wird die metallische Schicht auf die Haftvermittlerschicht aufgebracht. Hierbei wird die metallische Schicht bevorzugt direkt auf die Haftvermittlerschicht aufgebracht.

Geeignete metallische Schichten sind Schichten insbesondere aus Al, Cu, Ag, Au, Cr, Ni, Zn, Pd, V, In oder Sn.

Die metallische Schicht kann dabei vorzugsweise PVD- oder CVD-Verfahren etwa durch thermisches Verdampfen, durch Sputtern oder Elektronenstrahlbedampfung abgeschieden.

Die Dicke der metallischen Schicht ist abhängig vom der Verwendung der metallisierten Folie und kann etwa 5 - 100 nm, bevorzugt 10 -70 nm, besonders bevorzugt 20 - 50 nm betragen.

Gegebenenfalls kann auf die metallische Schicht eine Deckschicht aufgebracht werden, die gut bedruckbar ist. Die Deckschicht besteht vorzugsweise aus einem Lack auf Basis von Polyester, Polyurethan oder deren Mischungen, auf Basis von Acrylaten, beispielsweise Ethylenacrylaten. Derartige Deckschichten sind im Thermotransfer-, Offset, Flexo- oder Inkjetdruck und auch mit UV- Farben ausgezeichnet bedruckbar.

Gegebenenfalls kann die Metallschicht auch direkt bedruckt werden.

## Patentansprüche

1. Metallisierte Folie, insbesondere eine metallisierte Kunststofffolie, die auf zumindest einer Oberfläche eine metallische Schicht aufweist, **dadurch gekennzeichnet, dass** sie folgende Schichten in der angegebenen Reihenfolge aufweist:
a) ein Trägersubstrat aus einer Kunststofffolie
b) eine Lackschicht als Haftvermittlerschicht
c) eine, insbesondere direkt, auf die Lackschicht aufgebrachte, metallische Schicht
d) ggf. eine Deckschicht,

2. Metallisierte Folie nach Anspruch 1, **dadurch gekennzeichnet, dass** die metallische Schicht aus Al, Cu, Ag, Au, Cr, Ni, Zn, Pd, V, In oder Sn besteht.

3. Metallisierte Folie nach einem der Ansprüche 1 oder 2, **dadurch gekennzeichnet, dass** die metallische Schicht durch PVD- oder CVD-Verfahren aufgebracht ist.

4. Metallisierte Folie nach einem der Ansprüche 1 bis 3, **dadurch gekennzeichnet, dass** das Trägersubstrat aus einer flexiblen Kunststofffolie, welche aus einem oder mehreren Materialien ausgewählt aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK) Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF) und/oder Ethylen-Tetrafluorethylen-Hexafluorpropylen-Fluorterpolymer (EFEP) besteht.

5. Metallisierte Folie nach Anspruch 4, **dadurch gekennzeichnet, dass** das Trägersubstrat aus Polyethylen besteht.

6. Metallisierte Folie nach einem der Ansprüche 1 bis 5, **dadurch gekennzeichnet, dass** die aufgebrachte Lackschicht auf Basis eines selbstvernetzenden und/oder eines mit Härter vernetzbaren Polymers Polymers aufgebaut ist.

7. Metallisierte Folie nach einem der Ansprüche 1 bis 6, **dadurch gekennzeichnet, dass** die Lackschicht 160 - 300 L/cm aufweist.

8. Metallisierte Folie nach einem der Ansprüche 1 bis 7, **dadurch gekennzeichnet, dass** die Deckschicht auf Basis von Polyester, Polyurethan oder deren Mischungen oder auf Basis von Acrylaten aufgebaut ist.

9. Verfahren zur Herstellung einer metallisierten Folie, insbesondere nach einem der Ansprüche 1 bis 8, **gekennzeichnet durch** folgende Verfahrensschritte:
a) Bereitstellen eines Trägersubstrats aus einer Kunststofffolie,
b) Aufbringen einer Lackschicht aus einem selbstvernetzenden und/oder eines mit Härter vernetzbaren Polymers, mit160 - 300L/cm,
c) Trocknen der Lackschicht mit einer Temperaturfolge von 40 - 70°C → 90 - 120°C → 40 - 70°C bei einer Bahngeschwindigkeit von 1 -500 m/min bei einer Bahnspannung von <50 daN/m,
d) Aufbringen einer metallischen Schicht, insbesondere direkt, auf die Lackschicht durch PVD- oder CVD-Verfahren, durch thermisches Verdampfen, durch Sputtern oder Elektronenstrahlbedampfung,
e) gegebenenfalls Aufbringen einer Deckschicht.

10. Verfahren nach Anspruch 9 **dadurch gekennzeichnet, dass** die Lackschicht in Schritt c) mittels zumindest einer Rasterwalze und/oder mittels zumindest einer Düse, insbesondere einer Schlitzdüse, und/oder zumindest einer Mayer Stange aufgetragen wird.
